# EUROPEAN PATENT APPLICATION

(11) **EP 2 731 311 A1**
(43) Date of publication of application: **14.05.2014**
(21) Application number: 12306390.1
(22) Date of filing: 09.11.2012
(51) Int. Cl.: H04L 29/08, H04L 29/06, H04N 21/41

(54) **Method for transferring the provisioning of a first multimedia live content from a mobile device towards a fixed device**

(71) Applicant: Alcatel Lucent, 75007 Paris (FR)
(72) Inventor: Weik, Hartmut, 70195 Stuttgart (DE); Blinn, Armin, 70435 Stuttgart (DE)
(74) Representative: ALU Antw Patent Attorneys

(57) **Abstract**

The present invention relates to a method for transferring the provisioning of a first live content of a plurality of live contents from a mobile device adapted to receive live content, towards a fixed device adapted to receive live content. The mobile device is coupled over a first communications network to the content provider and the fixed device is coupled to the content provider over a second communications network. This method first comprises the step of associating the mobile device with the Fixed device and subsequently exchanging, live content information associated with the first live content received at the mobile device between the mobile device and the fixed device the over the established association, followed by the step of the content provider provisioning the first live content to the fixed device over the second communications network where the first live content is selected by the fixed device based on the live content information associated with said first live content.

## Description

The present invention relates to a method for transferring the provisioning of a first live content from a mobile device for receiving live content towards a fixed device for receiving live content, a related *system,* a related mobile device and related fixed device.

Currently such system includes a fixed device for receiving and subsequent rendering of live content being multimedia streams provided by a content provider. The fixed device for instance is an internet connected television or a Set-top-box being coupled to the content provider over a communications network like a Cable network, digital subscriber line network, a satellite communications network, a mobile communications network or any other suitable communications network.

The received multimedia signal may be a DVB-T signal, a DVB-C signal, DVB-S signal, a DVB-IPTV signal or an internet signal like YouTube.

Additionally to the fixed device for receiving the live content, i.e. the multimedia stream, the system may include a mobile device for receiving and rendering such multimedia streams provided by the content provider. The mobile device further is connected to the content provider over a first communications network, including for example a mobile data network like UMTS or a short-range wireless network like Wi-Fi or any other suitable communications network.

Nowadays, the transferring of the provisioning of a first live content from a mobile device for receiving such multimedia content, towards a fixed device for receiving a live content is performed via network signaling indicating that the currently received first live content, i.e. Multimedia live stream that is received at the mobile device is to be transferred to the fixed device.

I.e. in the network a stream has to be provided, that is suited to be received by the fixed device. This requires the setup of a connection from a dedicated encoder, which is able to encode the video stream in a way that this stream can be received by the fixed device. In the setup-phase the mobile device can allocate the fixed device e.g. by the display of e.g. a 2-dimensional barcode. When identified, the mobile device can use the received information to initiate the setup from the dedicated encoder via the network to the dedicated fixed device

Hence the current method and system are disadvantageously in that the transfer of a live content from a first mobile device towards a fixed device is performed in such manner that a substantive delay in video signal is caused which delay results in a degraded user experience.

An objective of the present invention is to provide a method for transferring the provisioning of a first live content stream from a mobile device for receiving live content towards a fixed device for receiving live content, a related *system,* a related mobile device and a related fixed device of the above known type but wherein the transferring of the provisioning of a first live content from a mobile device for receiving live content towards a fixed device for receiving live content done more efficiently, consequently resulting in an improved user experience.

According to the invention, this objective is achieved by the method for transferring the provisioning of a first live content from a mobile device for receiving live content towards a fixed device for receiving live content according to claim 1, a related system according to claim 8, a related fixed device according to claim 9, and a related mobile device according to claim 13.

Indeed, by first establishing an association between the mobile device and the fixed device, subsequently live content information can be exchanged between the mobile device and the fixed device over the earlier established association, the first live content can be selected by the fixed device based on the exchanged live content information obtained from the mobile device and which selection is followed by the content provider provisioning the first live content to the fixed device over the second communications network, the transfer of the first live content from the mobile device towards the fixed device is executed in a fast and efficient way causing no delay in the process of transferring the live content.

The step of associating includes the step of linking the mobile device with the fixed device and a subsequent establishment of a wireless short-range connection like SSID and DLNA over WLAN, Bluetooth, wireless LAN or other suitable kind of connection.

The mobile device will challenge the fixed device or vice versa. Upon receipt of a correct answer, both devices will establish and keep their association.

A mobile device that is associated with a stationary TV set passes all information that is relevant for receiving the media stream of a channel, information about channel change or channel selection to the TV-set, which then acts as a relay station for the device. This includes also any live multimedia streams.

A further characteristic feature of the present invention is described in claim 2 and in claim 10.

The method for transferring the provisioning of a live content from a mobile device towards a fixed device further comprises the step of possibly at association of the mobile device with the fixed device FD, the fixed device relaying the first live content which is received at said Fixed device towards the mobile device.

In this way the live content can be received and rendered at the mobile device when associated with the fixed device, so that a live content can be consumed at a mobile device instead of at the fixed device, where the fixed device being a television set coupled to a set-top-box of or in parallel to the fixed device.

Additionally, more than one mobile device of a plurality of mobile devices is able to be associated with the fixed device so that each further mobile device of said plurality in addition also is able to receive live content that is relayed by the fixed device towards each mobile devices of the plurality of mobile devices.

Another further characteristic feature of the present invention is described in claim 3 and in claim 11.

The present invention further comprises the feature of the mobile device controlling the associated fixed device via the association established. A control command initiated by a control application executed at the mobile device can be sent towards the fixed device, over the association and subsequently interpreted and executed at the fixed device.

Examples of such control commands are the well known control command of a remote control (change channel, volume up/down...) but in addition a command instructing the fixed device to relay the currently received multimedia live stream towards the mobile device or even to one or more further associated mobile device.

Another further characteristic feature of the present invention is described in claim 4.

The present invention further comprises the feature of the mobile device being adapted to control the associated fixed device in that controlling includes the selection of a live content from a plurality of live contents (to be) provisioned by the content provider to the fixed device.

Another further characteristic feature of the present invention is described in claim 5 and in claim 12.

The present invention further additionally may include the feature that relaying of the Multimedia live stream further includes the adapting of the relayed live content to the capabilities of the mobile device.

The adaptation of the live content may include conversion of the format and/or resolution of the originally live content e.g. received stream into a format with lower resolution that is adapted to the smaller screen of the mobile device and/or the adaptation may include a protocol conversion on the live content, e.g. multimedia live stream received by the fixed device in order to adapt the protocol that can be processed by the receiving mobile device.

Another further characteristic feature of the present invention is described in claim 6.

The associating of the mobile device with the fixed device can be initiated at detection of presence of the mobile device by means of the fixed device or alternatively by means of detecting the presence of a fixed device in the near surroundings of the mobile device.

Either the mobile device or the fixed device may detect presence of respectively the fixed device or the mobile device by first detecting the presence of a short-range wireless network (e.g. WLAN, Bluetooth or other suitable connections) and subsequently detecting coupled devices

Another further characteristic feature of the present invention is described in claim 7.

Alternatively the associating of the mobile device with the fixed device or the other way around at receipt of an explicit command sent by the mobile device hence triggered by the mobile device, or by receipt of a command sent by said fixed device, hence triggered by the fixed device, where the command that includes connection parameters for establishing a connection between the mobile and the fixed device, forms the trigger for establishing the connection.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a system for transferring the provisioning of a first live content from a mobile device for receiving live content, towards a fixed device according to the present invention is executed.
Fig. 2 represents a functional representation of a fixed device according to the present invention.
Fig. 3 represents a functional representation of a mobile device according to the present invention.

In the following paragraphs, referring to the drawings, an implementation of a system for transferring the provisioning of a first live content from a mobile device for receiving live content, towards a fixed device according to the present invention, is described.

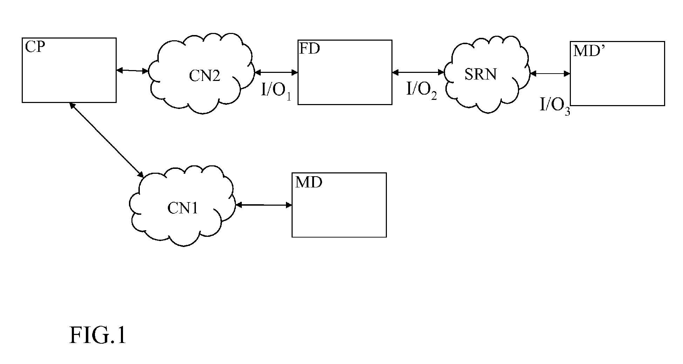

In the first paragraph of this description the main functional parts of the system as presented in FIG. 1 are described. In the second paragraph, all connections between the before mentioned elements and described means are defined.

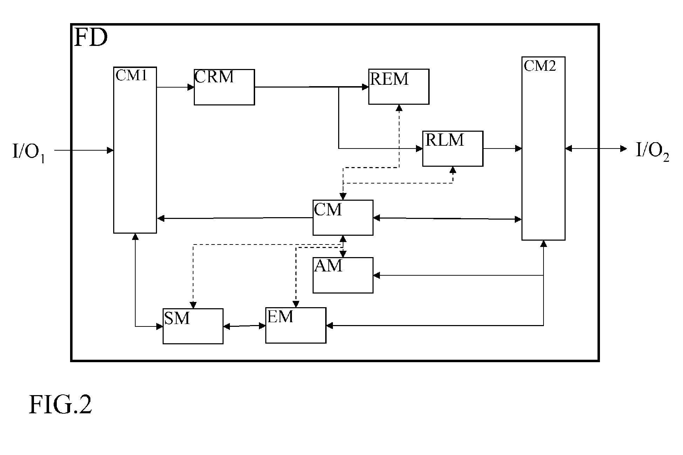

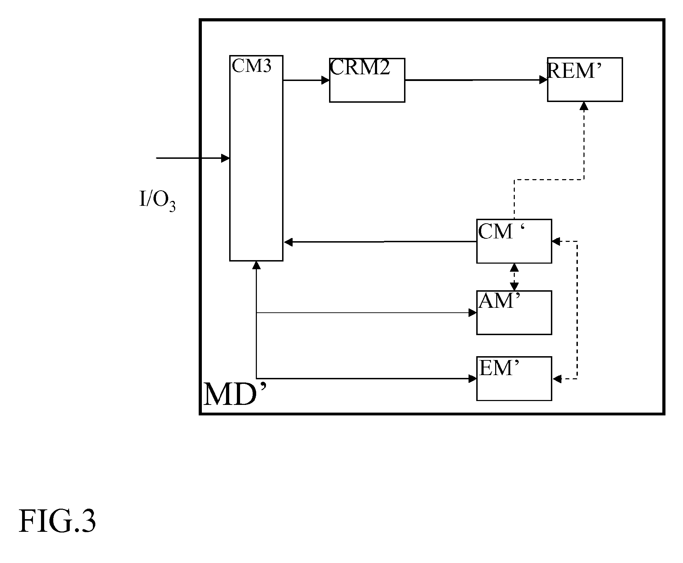

In the subsequent paragraph all relevant functional means of the fixed device FD, and the mobile device MD of the mentioned system as presented in the respective in FIG.2 and FIG. 3 are described.

In the succeeding paragraph the actual execution of the method for transferring the provisioning of a first live content from a mobile device for receiving live content, towards a fixed device according to the present invention is described.

First essential element of the present invention is a content provider CP for instance being a Head End device that is adapted to provision live content of a plurality of live contents e.g. stored in a coupled storage like a database, to coupled devices like mobile device for receiving live content or fixed device FD for receiving such live content.

Such mobile device MD, MD' may for instance be a smart-phone, a tablet or a notebook. The mobile device is denoted with MD while the mobile device is in a first position, i.e. coupled to the communications network CN1 and is denoted with MD while the mobile device is in a second position, i.e. coupled to the short range communications network SRN,

The fixed device FD, for instance may be implemented by means of a separate Set-top-Box or integrated in an internet connected television.

The content provider CP is coupled to the fixed device FD over a second communications network CN2 which may be a Cable network, a digital subscriber line network, a satellite communications network or a mobile communications network.

The transmitted live content may be carried by means of a DVB-T signal, a DVB-C signal, DVB-S signal, a DVB-IPTV signal or an internet signal like YouTube.

The content provider CP initially and in the prior art situation is coupled to the mobile device MD over a first communications network, including for example a mobile data network like UMTS or a short-range wireless network like Wi-Fi.

In a second instance, in case of the present invention the Mobile device MD' is coupled to the fixed device FD over a wireless short-range connection SRN like SSID and DLNA over WLAN, Bluetooth, wireless LAN or other suitable kind of connection.

The first essential element of the present invention is the fixed device FD comprising a connection means CM1 that is adapted to set-up a data connection over the second communications network, between the fixed device FD and the content provider CP. Further, the fixed device FD includes a content reception means CRM for receiving content from the content provider CP, an associating means AM for associating a mobile device MD with the fixed device FD over the short range network SRN, in this embodiment the short range network SRN being a Wi-Fi network. The fixed device FD further comprises an exchanging means EM for exchanging live content information associated with the first content received at the mobile device MD, between the mobile device MD' and the fixed device FD over the established association. The fixed device additionally includes a selecting means SM for selecting live content from a plurality of live contents.

The fixed device FD additionally comprises a content rendering means REM that is able to render the received live content at an integrated or coupled screen with or without integrated or coupled speakers and a content relaying means RLM for relaying the live content received at said fixed device FD towards the mobile device MD.

Finally the fixed device includes a second connection means CM2 that is adapted to set-up an association being a data connection over the short-range network for exchanging control information and live content between the fixed device and the mobile device during the phase of associating with the fixed device and while being associated with the fixed device.

The control means CM of the fixed device FD additionally is adapted to execute control of the fixed device FD via the established association in response to control commands of the mobile device MD.

A second essential element is the mobile device MD that first comprises a connection means CM3 that is adapted to set-up an association being a data connection over the short-range network for exchanging control information and live content between the mobile device MD and the fixed device FD during the phase of associating with the fixed device and while being associated with the fixed device FD.

The mobile device additionally comprises a content reception means CRM2 for receiving live content from the content provider CP or alternatively from the fixed device while being associated with the fixed device FD and a content rendering means REM' that is able to render the received live content at an integrated or coupled screen with or without integrated or coupled speakers.

The mobile device additionally comprises an associating means AM' for associating the mobile device MD with the fixed device FD and an exchanging means EM' for exchanging live content information associated with the live content received at the mobile device MD which live content is the content that is forwarded directly by the content provider towards the mobile device while the mobile device is not yet associated with the fixed device FD.

Further the mobile device MD comprises a control means CM' for controlling the cooperation of all means of the mobile device and coordinate all interactions between the involved means of the mobile device and the involved means of the fixed device.

It is to be noted that the dashed lines in FIG. 2 are control lines between the respective control means CM and the further functional means of each of the fixed device FD.

It is to be noted that the dashed lines in FIG. 3 are control lines between the respective control means CM' and the further functional means of each of the mobile device MD.

In order to explain the present invention first it is assumed that a fixed device FD for instance is an internet connected television or a Set-top-box integrated in an internet connected television or a separate Set-top-box being coupled to the content provider CP over a communications network CN2 that is implemented by means of a Cable network. Additionally it is assumed that live content, i.e. channel 1 being CNN, is streamed from the content provider CP towards the fixed device FD, which content is received by the content reception means CRM of the fixed device FD and subsequently rendered by the rendering means REM, i.e. the television or the screen coupled to the set-top box.

Moreover, it is assumed that initially the mobile device MD is connected, via first communications network CN 1 and the Connection means CM3, to the content provider CP which streams live content, i.e. channel 2, towards the mobile device MD. Live content, Channel 2 being BBC1, is received by the content reception means CRM2 and rendered at the rendering means REM' of the mobile device MD, i.e. the screen of the mobile device, e.g. being a smart-phone or an e.g. a 3G internet connected tablet.

At a certain moment, Mobile device MD moves into the reach of the Wi-Fi network SRN where the fixed device FD is coupled to. In addition the fixed device being the set-top box is connected to the to the cable network CN2 along which channel 1 being CNN is received

At detection by the mobile device MD of the Wi-Fi network SRN and the coupled fixed device FD, the associating means AM' of the mobile device MD may initiate an association by sending a request for linking the mobile device MD with the fixed device FD and a subsequent establishment of a wireless short-range connection over the Wi-Fi network SRN. At the fixed device FD an association means AM receives the request, which is processed and necessary signaling under control of respective control means CM, CM' in the respective fixed device and mobile device MD, an association between the mobile device MD and the fixed device FD is established via the involved fixed device connection means CM2 and connection means CM3 on the side of the mobile device. Both connection means CM2 as connection means CM3 are instructed by the respective control means CM and CM' to establish a connection over the short range network SRN. Connection means CM3 is instructed by the control means CM' to first or at the same time release the connection between Connection means CM3 and the content provider CP over the first communications network CN1.

Subsequently under control of the control means CM' the exchanging means EM' of the mobile device MD sends live content information associated with first content received at the mobile device MD, i.e. channel 2 being BBC1, from the mobile device MD towards the fixed device FD over the established association, which information subsequently is received at the exchanging means EM of the fixed device FD. Based on the received live content information associated with first content, i.e. channel 2, the selecting means SM, under control of the control means CM', sends channel select message towards the content provider CP requesting the content provider CP to provision the fixed device FD with the live content stream of Channel 2, i.e. the BBC1 signal. Subsequently the live content channel 2 will be streamed by the content provider CP towards the fixed device FD. Subsequently the current live content being the live stream of channel 2, i.e. the BBC1 signal instead of the live stream of channel 1, i.e. the CNN signal is received at the content reception means CRM of the fixed device and subsequently rendered by the rendering means REM, i.e. the television or the screen coupled to the set-top box.

Hence, the transferring of the provisioning of a first Multimedia live stream, i.e. channel 2, being the CNN signal from a mobile device MD for receiving multimedia towards a fixed device FD for receiving live content, is performed in a manner which is fast and efficient resulting in an improved user experience.

Subsequently the live content being the live stream of channel 2, received by the content reception means CRM of fixed device FD can instead of, or alternatively be relayed by the means for relaying RLM from the Fixed device FD towards the mobile device MD'.

Hence, in accordance with the present invention again the transferring of provisioning of a first live content, i.e. channel 2 being the CNN signal, from a mobile device MD for receiving multimedia, towards a fixed device FD for receiving live content and subsequently relayed to the mobile device MD', is performed in a manner which is fast and efficient without involving the network for transferring the live content received at the mobile device MD, via the second communications network CN2, towards the mobile device MD but in the new situation transferring the live content via first communications network CN1 and the fixed device towards the mobile device MD'.

It is to be noted that mobile device is denoted with MD' where the mobile device is associated with the fixed device over the short range network SRN

The present invention further comprises the feature of the control means CM' of the mobile device MD' controlling the associated fixed device FD via the association established. A control command initiated by a control application executed at the mobile device can be sent towards the fixed device FD, over the association and subsequently interpreted and executed by the control means CM at the fixed device FD.

Examples of such control commands are the well known control command of a remote control (change channel, volume up/down...) but in addition a command instructing the fixed device to relay the currently received multimedia live stream towards the mobile device or even to one or more further associated mobile device.

The present invention further additionally may include the feature that relaying of the live content further includes the adapting of the relayed live content to the capabilities of the mobile device.

The adaptation of the live content may include conversion of the format and/or resolution of the originally live content e.g. received stream into a format with lower resolution that is adapted to the smaller screen of the mobile device and/or the adaptation may include a protocol conversion on the live content, e.g. multimedia live stream received by the fixed device in order to adapt the protocol that can be processed by the receiving mobile device.

This can also include the usage of different protocols, e.g. DASH as a standard or HLS for e.g. Apple devices.

The present invention additionally may comprise the feature of the mobile device MD' being adapted to control the associated fixed device FD in that controlling includes the selection of a Multimedia live stream from a plurality of Multimedia live streams (to be) provisioned by the live service provider SP to said fixed device FD. (e.g. channel change).

Additionally, the fixed device FD further comprises control means CM for executing control of the fixed device FD over the established association in response to control commands of the mobile device MD, MD'.

It is to be noted that instead of the mobile device, also the fixed device may initiate the establishment of an association between the mobile device and the fixed device. Such initiating the establishment of an association may be executed in an automatic manner triggered by means of presence detection or may alternatively be performed manually by means of sending commands for establishing an association.

The mobile device will challenge the fixed device or vice versa. Upon receipt of a correct answer, both devices will establish and keep their association.

A mobile device that is associated with a stationary TV set passes all information that is relevant for receiving the media stream of a channel, information about channel change or channel selection to the TV-set, which then acts as a relay station for the device. This includes also any live multimedia streams.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for transferring the provisioning of a first live content of a plurality of Live contents from a mobile device (MD, MD') adapted to receive live content, towards a fixed device (FD) adapted to receive live content, said first live content of said plurality of Live contents being provisioned by a content provider (CP), said mobile device (MD, MD') being coupled over a first communications network (CN1) to said content provider (CP) and said fixed device (FD) being coupled to said content provider (CP) over a second communications network (CN2), said method comprising the steps of:
a. associating said mobile device (MD) with said Fixed device (FD); and
b. exchanging, live content information associated with said first live content received at said mobile device (MD), between said mobile device (MD) and said fixed device (FD) over said association; and
c. said content provider (CP) provisioning said first live content to said fixed device (FD) over said second communications network (CN2) where said first live content is selected by said fixed device (FD) based on said live content information associated with said first live content.

2. Method for transferring the provisioning of a live content according to claim 1, **CHARACTERISED IN THAT** said method further comprises the step of said fixed device (FD) relaying said first live content to said mobile device (MD, MD').

3. Method for transferring the provisioning of a live content according to claim 1 or claim 2, **CHARACTERISED IN THAT** said method further comprises the steps of said mobile device (MD) controlling said associated fixed device (FD) via said association established.

4. Method for transferring the provisioning of a live content according to claim 3, **CHARACTERISED IN THAT** said step of said mobile device (MD, MD') controlling said associated fixed device (FD) includes controlling a selection of a live content from a plurality of live content provisioned by said content provider (CP) to said fixed device (FD).

5. Method according to claim 2, **CHARACTERISED IN THAT** said step of relaying said live content further includes the step of adapting said live content to capabilities of said mobile device (MD).

6. Method according to claim 1, **CHARACTERISED IN THAT** said step of associating said mobile device (MD) with said fixed device (FD) at detection of said presence of said mobile device (MD).

7. Method according to claim 1, **CHARACTERISED IN THAT** said step of associating said mobile device (MD) with said fixed device (FD) at receipt of a command sent by said mobile device (MD) or by receipt of a command sent by said fixed device (FD).

8. System for transferring the provisioning of a first live content of a plurality of live contents from a mobile device (MD, MD') adapted to receive live content, towards a fixed device (FD) adapted to receive live content, said system comprising a content provider (CP) adapted to provide said first live content from said plurality of live content to a mobile device (MD, MD') and a fixed device (FD) included in said system, said mobile device (MD, MD') being coupled over a first communications network (CN1) to said content provider (CP) and said fixed device (FD) being coupled to said content provider (CP) over a second communications network (CN2), said system comprising:
a. an association means (AM), for associating said mobile device (MD, MD') with said Fixed device (FD); and
b. an exchanging means (EM), for exchanging live content information associated with said first live content received at said mobile device (MD, MD'), between said mobile device (MD, MD') and said fixed device (FD) over said association; and
c. a provisioning means (PM) for provisioning by said content provider (CP) said first live content to said fixed device (FD) over said second communications network (CN2); and
d. a selection means (SM) for selecting said first live content based on said live content information associated with said first live content.

9. Fixed device (FD) for use in a system according to claim 8, said fixed device (FD) being coupled to a content provider (CP) over a second communications network (CN2), said fixed device comprising:
a. content reception means (CRM), for receiving content from said content provider (CP); and
b. an association means (AM), for associating a mobile device (MD, MD') with said Fixed device (FD); and
b. an exchanging means (EM) for exchanging live content information associated with first content received at said mobile device (MD, MD'), between said mobile device (MD, MD') and said fixed device (FD) over said association; and
c. selecting means (SM) for selecting said first live content for receipt at said fixed device (FD) said selecting being based on said live content information associated with said first live content.

10. Fixed device (FD) according to claim 9, wherein said fixed device (FD) further comprises means for relaying said first live content received at said fixed device (FD) to said mobile device (MD, MD').

11. Fixed device (FD) according to claim 9 or 10, wherein said fixed device (FD) further comprises means for executing control of said fixed device (FD) via said association established in response to control commands of said mobile device (MD, MD').

12. Fixed device (FD) according to claim 10, wherein said means for relaying further is adapted to adapt said live content to capabilities of said mobile device (MD, MD').

13. Mobile device (MD, MD') for use in system according to claim 8, said mobile device (MD, MD') being coupled over a first communications network (CN1) to a content provider (CP), said mobile device comprising:
a. content reception means (CRM2), for receiving live content from said content provider (CP); and
b. associating means (AM') for associating said mobile device (MD, MD') with said fixed device (FD); and
c. exchanging means (EM') for exchanging live content information associated with first content received at said mobile device (MD, MD'), between said mobile device (MD, MD') and said fixed device (FD) over said association, wherein said content reception means (CRM2), further is suitable for receiving said first live content from said fixed device (FD) via said association instead of receiving said first live content from said content provider (CP).
